# EUROPÄISCHE PATENTSCHRIFT

(11) **EP 0 797 080 B1**
(45) Veröffentlichungstag und Bekanntmachung des Hinweises auf die Patenterteilung: **24.10.2007**
(21) Anmeldenummer: 97102943.4
(22) Anmeldetag: 22.02.1997
(51) Int. Cl.: G01F 15/00, G01F 1/28

(54) **Durchflussregulierventil mit Durchflussmesser**
Flow control valve with flowmeter
Vanne de réglage d'écoulement avec débitmètre

(30) Priorität: 18.03.1996 CH 70696
(43) Veröffentlichungstag der Anmeldung: 24.09.1997
(73) Patentinhaber: Ostaco AG, 8902 Urdorf (CH)
(72) Erfinder: Spiess, Fritz, 8918 Unterlunkhofen (CH); Muntwyler, Stefan, 8957 Spreitenbach (CH)
(74) Vertreter: Blum, Rudolf Emil

(56) Entgegenhaltungen:
- EP-A- 0 068 251
- DE-U- 9 111 925
- DE-U- 9 404 156
- US-A- 3 115 892

## Beschreibung

Die Erfindung betrifft ein Durchflussregulierventil mit Durchflussmesser, mit einem einen Leitungsabschnitt aufweisenden Gehäuse, einem radial zum Leitungsabschnitt angeordneten Querrohr, mit einer gleichachsig zum Querrohr angeordneten Drehspindel, die im Gehäuse gelagert ist, und eine sich durch die Drehspindel erstreckende, nach aussen abgeschlossene Bohrung aufweist, in die eine Stellunganzeigestange ragt, die eine Federauflagestelle aufweist, dass zwischen dieser Federauflagestelle und einer Drehspindel-Federabstützung eine die Anzeigeposition bestimmende Schraubenfeder eingespannt ist, und ein mit Hilfe der Drehspindel in seiner Endstellung verschliessbarer Ventil-Schliesskörper vorhanden ist, und mit einem im Querrohr angeordnetem Anströmglied, das durch die Schraubenfeder in eine Ausgangsstellung vorgespannt und von der Leitungsströmung axial verschiebbar ist, dessen jeweilige Stellung von aussen durch einen durchsichtigen Teil der Drehspindel hindurch auf einer Skala und Anzeigemarke umfassenden Anzeigeeinrichtung ablesbar ist, wobei das Querrohr in den Leitungsabschnitt radial hineinragt und die Drehspindel den Ventil-Schliesskörper trägt, der durch die Spindeldrehung unmittelbar die Austrittsöffnung des Querrohres öffnet und verschliesst, und dass das Anströmglied und die Stellungsanzeigestange gemeinsam axial verschiebbar im Ventil-Schliesskörper geführt sind.

Ein solches Ventil mit Durchflussmesser ist durch die DE-PS 35 09 718 bekannt. Es wird bezweckt, dieses bewährte Ventil mit Durchflussmesser dahingehend zu verbessern, dass seine konstruktionsbedingte Baulänge verringert werden kann und gleichzeitig die Auflösung der Anzeigeeinrichtung vergrössert werden kann, also eine längere Skala vorhanden sein kann. Sowohl die kürzere Baulänge des Ventils mit Durchflussmessers, d.h. die Länge der Erstreckung in Richtung der Stellungsanzeigestange, als die grössere Auflösung der Anzeigeeinrichtung sind in der Praxis sehr erwünscht, da einerseits hierdurch das Ventil mit Durchflussmesser auch bei beschränkten Platzverhältnissen verwendet werden kann und andererseits die Ablesung der gemessenen Durchflussmenge genauer und leichter erfolgt.

DE 94 04 156 U1 offenbart ein Verteilerventil mit Flüssigkeits-Durchflussmesser mit einem ähnlichen Aufbau, umfassend eine Hauptleitung und eine Zweigleitung, die einen Ventilsitz bildet, sowie eine Einstellspindel, die einen haubenförmigen Ventilschliesskörper trägt. In der Zweigleitung ist ein Anströmglied angeordnet, welches mit einer federbelasteten Anzeigestange bewegungsverbunden ist, zum Anzeigen der mit der Einstellspindel eingestellten Durchflussmenge durch das aus Ventilschliesskörper und Ventilsitz gebildete Ventil.

Das erfindungsgemässe Ventil mit Durchflussmesser ist dadurch gekennzeichnet, dass die. Drehspindel als Drehschieber ausgebildet ist, dessen Ventil-Schliesskörper eine Steuerkante aufweist, die beim Querrohr liegt und drehbar ist, wobei das Querrohr in seiner Wandung eine Durchbrechung aufweist, deren Rand den Ventilsitz bildet, dass die Stellungsanzeigestange undrehbar gegenüber der Drehspindel gelagert ist und mit einer Drehbüchse derart bewegungsverbunden ist, dass die Axialbewegung der Stellungsanzeigestange in eine Drehbewegung der Drehbüchse umgeformt wird, wobei die Drehbüchse einen Teil der Anzeigeeinrichtung trägt.

In der Zeichnung ist ein Ausführungsbeispiel des Erfindungsgegenstandes dargestellt. Es zeigen:
Fig. 1 das Ventil mit Durchflussmesser in einem Längsschnitt,
Fig. 2 eine Seitenansicht auf den Auslassstutzen des Gehäuses vom Ventil, in Richtung eines Pfeiles A in Fig. 1, und
Fig. 3 eine Draufsicht auf das Ventil mit Durchflussmesser.

Im folgenden wird der Aufbau des Ventils erläutert. Das Gehäuse umfasst die beiden Gehäuseteile 1 und 2, die über ein Gewinde 3 miteinander verschraubt sind. Der Gehäuseteil 1 hat einen Einlassstutzen 4 und einen Auslassstutzen 5. Die Strömung durch das Gehäuse erfolgt in Richtung der Pfeile 6. Die Stutzen 4, 5 bilden somit den Leitungsabschnitt des Gehäuses. Radial hierzu ist ein Querrohr 7 vorhanden, das Teil des Gehäuses ist. Auf der Einlasseite des Gehäuses 1 bis 5 weist das Querrohr 7 eine Durchbrechung 8 auf. Auf der Auslasseite hat das Querrohr 7 eine Durchbrechung 10, deren Rand einen Ventilsitz bildet. Der Gehäuseteil 2 mit dem Gewinde 3 ist als Überwurfmutter ausgebildet, die auf einer planen Fläche einen Symbolträger 11 aufweist.

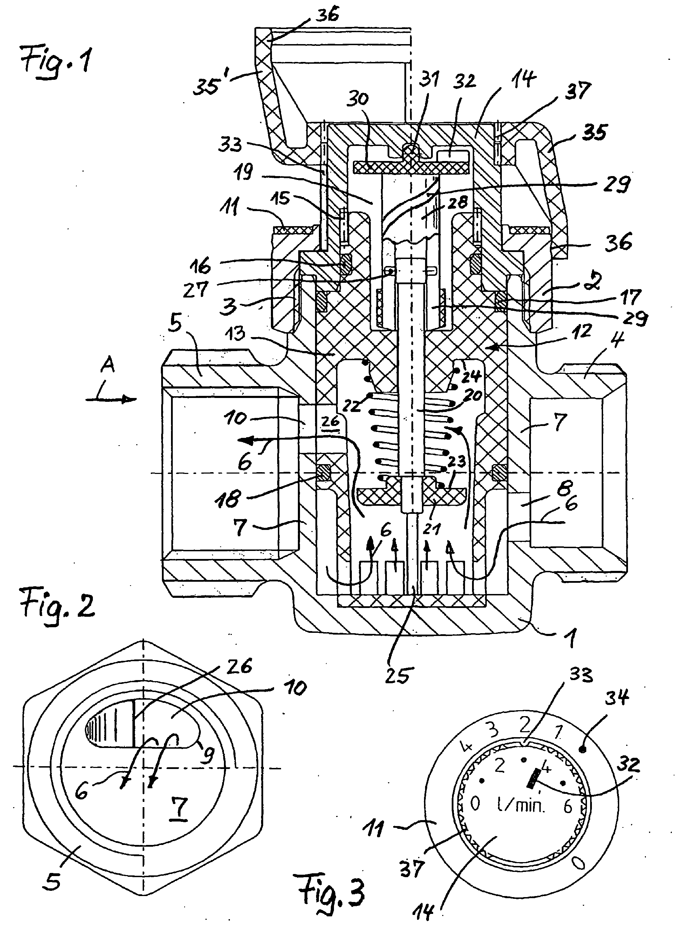

Im folgenden wird der Durchflussmesser des Erfindungsgegenstandes erläutert. Im Querrohr 7 ist eine Drehspindel 12 drehbar und abdichtend gelagert. Die Drehspindel 12 ist wiederum zweiteilig und besteht aus einem in Fig. 1 mit gekreuzter Schraffur versehenen unteren Teil 13 und einem aus durchsichtigem Material bestehenden oberen Teil 14. Die drehfeste Verbindung beider Teile 13 und 14 erfolgt über einen Formschluss z.B. Kerbverzahnung 15. Zur gegenseitigen Abdichtung beider Teile 13 und 14 dient ein O-Ring 16, und zur Abdichtung der Drehspindel 12 im Querrohr 7 dienen zwei O-Ringe 17 und 18. Die Drehspindel 12 hat eine nach aussen abgeschlossene Bohrung 19.

In der Achse der Drehspindel 12 liegt eine axial verschiebbare Stellungsanzeigestange 20. Auf dieser ist unten ein plattenförmiges Anströmglied 21 befestigt. Dieses liegt mit radialem Abstand innerhalb der Drehspindel 12. Es ist eine Schraubendruckfeder 22 vorhanden, die einerends an der Federauflagestelle 23 abgestützt ist. Anderenends liegt die Feder 23 an einer Federabstützung 24 der Drehspindel an. Die Stellungsanzeigestange 20 ist in der Drehspindel 12 axial verschiebbar aber undrehbar geführt. Hierzu ist die innere Mantelfläche der Drehspindel 12 mit zwei einander diametral gegenüberliegenden Längsrippen 25 (Kamm) versehen, die in zwei, nicht dargestellte, ebenfalls diametral gegenüberliegende Ausnehmungen (Nut) des Anströmglieds 21 ragen, so dass das Anströmglied über diese Rippen 25 undrehbar, aber axial verschiebbar geführt ist. Der in Fig. 1 mit gekreuzter Schraffur versehene Teil 13 der Drehspindel 12 besteht z.B. aus Teflon (PTFE).

Um die gestellte Aufgabe lösen zu können, ist die Drehspindel 12 als Drehschieber ausgebildet, dessen Ventil-Schliesskörper eine Steuerkante 26 aufweist, die beim Auslassstutzen 5 mit dem Ventilsitz 9 zusammenwirkt und somit den Austrittsquerschnitt steuert (Fig. 2). Am oberen Ende trägt die Stellungsanzeige stange 20 zwei diametral einander gegenüberliegende Kulissenzapfen 27. Die Stellungsanzeigestange 20 ist mit einer Drehbüchse 28 derart bewegungsverbunden, dass die Axialbewegung der Stellungsanzeigestange 20 in eine Drehbewegung der Drehbüchse 28 umgeformt wird. Hierzu weist die Drehbüchse zwei wendelförmige Kulissen 29 auf, wobei in jeder Kulisse ein Kulissenzapfen 27 verschiebbar geführt ist. An der Drehbüchse 28 ist oben eine Platte 30 mit einem Lagerzapfen 31 vorhanden, wobei die Teile 30, 31 wiederum aus Teflon sein können. Die Platte 30 trägt eine Anzeigemarke 32, die als Zeiger dient (Fig. 3). Der durchsichtige Drehschieberteil 14 trägt auf seiner planen Fläche eine in Fig. 3 gezeigte Skala, wobei mit dem Zeiger 32 eine Durchflussmenge von etwa 3,8 L/min. anzeigt wird. Der Drehschieberteil 14 hat auf seiner Mantelfläche noch eine zweite Anzeigemarke 33, die als axial verlaufende Kerbe ausgebildet ist und in Fig. 3 beim Symbol "2" der Skala 11 steht. Die die Anzeigemarke 32 tragende plane Fläche der Drehbüchse 28 sowie die zuoberst liegende plane Fläche des durchsichtigen Teils 14 vom Drehschieber und die plane Fläche des Symbolträgers 11 liegen zueinander parallel.

Aus Fig. 3 sind also zwei Anzeigemarken 32 und 33 ersichtlich und zwei Skalen, wobei die eine auf dem Drehschieberteil 14 vorhanden ist und die andere Skala auf dem Symbolträger 11 vorhanden ist. Die Anzeigeeinrichtung 14, 32 zeigt die Durchflussmenge in L/min. durch das Ventil an. Die andere Anzeigeeinrichtung 11, 33 zeigt an, wie weit das Ventil geöffnet ist. Der Symbolträger 11 zeigt mit dem Symbol "1" eine 1/4-Öffnung, mit dem Symbol "2" eine 1/2-Öffnung, mit dem Symbol "3" eine 3/4-Öffnung und mit dem Symbol "4" eine 4/4-Öffnung an. Weiterhin zeigt das Symbol "0" eine Null-Öffnung an, die eine leckagedichte Stellung des Drehschiebers anzeigt. Der Symbolträger 11 trägt noch ein zusätzliches Symbol, das als Punkt 34 dargestellt ist und den Beginn der Öffnung des Ventils anzeigt.

In Fig. 1 ist oben eine Verschlusskappe 35 in zwei verschiedenen Stellungen gezeigt. Auf der rechten Seite ist die Verschlusskappe in Funktion, d.h. sie befindet sich mit einem Nocken 36 in einer Rastnut des Gehäuses, so dass die Drehspindel 12 (Drehschieber) nicht verdreht werden kann. Zur Steckverbindung zwischen Kappe 35 und Drehspindel 12 dient eine Verzahnung 37. Auf der linken Seite von Fig. 1 befindet sich die Kappe in einer umgekehrten Stellung 35' und dient als Handhabe zum Drehen der Drehspindel 12.

Die in Fig. 3 gezeigte Anzeigeeinrichtung 11, 33 dient zum Einstellen des gewünschten Öffnungsgrades des Ventiles 9, 26 (Fig. 2), also zum Einstellen des Durchflussquerschnittes 10. Will man die Durchflussmenge verändern, kann man ermessen, ob man die Durchfluss-Querschnittsfläche des Ventiles verändern soll oder ob der Pumpendruck verändert werden sollte.

Da die Drehspindel als Drehschieber ausgebildet ist, hat ihre Verdrehung nicht zu Folge, dass die Höhe des Ventils verändert wird. Da auch die axiale Bewegung der Stellungsanzeigestange durch die Drehbüchse in eine Drehbewegung umgewandelt wird, erfolgt keine axiale Verlängerung des Erfindungsgegenstandes. Da weiterhin alle Anzeigeeinrichtungen auf planen Ebenen liegen, quer zur Höhenerstreckung des Erfindungsgegenstandes, erhöhen die Anzeigeeinrichtungen auch nicht die Gesamthöhe des Erfindungsgegenstandes, und weiterhin können die Skalen auf ihrer Kreisbahn stark gestreckt werden und ergeben eine deutliche Anzeige.

Der Erfindungsgegenstand kann zum Regulieren der Durchflussmenge von Flüssigkeiten in unterschiedlichen Anwendungsbereichen verwendet werden, wie beispielsweise für Warmwasser-Heizungsanlagen, in der Nahrungsmittelindustrie, in der chemischen Industrie und in der Landwirtschaft.

## Patentansprüche

1. Durchflussregulierventil mit Durchflussmesser, mit einem einen Leitungsabschnitt (4, 5) aufweisenden Gehäuse (1, 2), einem radial zum Leitungsabschnitt (4, 5) angeordneten Querrohr (7), mit einer gleichachsig zum Querrohr angeordneten Drehspindel (12), die im Gehäuse (1, 2) gelagert ist, und eine sich durch die Drehspindel erstreckende, nach aussen abgeschlossene Bohrung (19) aufweist, in die eine Stellunganzeigestange (20) ragt, die eine Federauflagestelle (23) aufweist, dass zwischen dieser Federauflagestelle (23) und einer Drehspindel-Federabstützung (24) eine eine Anzeigeposition bestimmende Schraubenfeder (22) eingespannt ist, und ein mit Hilfe der Drehspindel (12) in seiner Endstellung verschliessbarer Ventil-Schliesskörper (12, 26) vorhanden ist, und mit einem im Querrohr (7) angeordnetem Anströmglied (21), das durch die Schraubenfeder (22) in eine Ausgangsstellung vorgespannt und von einer Leitungsströmung axial verschiebbar ist, dessen jeweilige Stellung von aussen durch einen durchsichtigen Teil (14) der Drehspindel (12) hindurch auf einer Skala und Anzeigemarke (32) umfassenden Anzeigeeinrichtung ablesbar ist, wobei das Querrohr (7) in den Leitungsabschnitt (3, 4) radial hineinragt und die Drehspindel (12) den Ventil-Schliesskörper (12, 26) trägt, der durch die Spindeldrehung unmittelbar eine Austrittsöffnung (10) des Querrohres (7) öffnet und verschliesst, und dass das Anströmglied (21) und die Stellungsanzeigestange (20) gemeinsam axial verschiebbar im Ventil-Schliesskörper (12, 26) geführt sind, **dadurch gekennzeichnet, dass** die Drehspindel (12) als Drehschieber ausgebildet ist, dessen Ventil-Schliesskörper eine Steuerkante (26) aufweist, die beim Querrohr (7) liegt und drehbar ist, wobei das Querrohr (7) in seiner Wandung eine Durchbrechung (10) aufweist, deren Rand (9) einen Ventilsitz bildet, dass die Stellungsanzeigestange (20) undrehbar gegenüber der Drehspindel (12) gelagert ist und mit einer Drehbüchse (28) derart bewegungsverbunden ist, dass die Axialbewegung der Stellungsanzeigestange (20) in eine Drehbewegung der Drehbüchse (28) umgeformt wird, wobei die Drehbüchse (28) einen Teil (32) der Anzeigeeinrichtung trägt.

2. Ventil mit Durchflussmesser nach Anspruch 1, **dadurch gekennzeichnet, dass** zwischen der Stellungsanzeigestange (20) und der Drehbüchse (28) zumindest eine aus Kulisse (29) und darin verschiebbar geführten Kulissenzapfen (27) bestehende Bewegungsum formeinrichtung vorhanden ist, wobei die Kulisse (29) wendelförmig ist.

3. Ventil mit Durchflussmesser nach Anspruch 2, **dadurch gekennzeichnet, dass** zwei einander diametral gegenüberliegende Kulissen (29) und zwei Kulissenzapfen (27) vorhanden sind.

4. Ventil mit Durchflussmesser nach einem der Ansprüche 1-3, **dadurch gekennzeichnet, dass** die Drehbüchse (28) auf einer planen Fläche die Anzeigemarke (32) aufweist und der Drehschieber (12, 14) auf einer planen Fläche die Skala der Anzeigeeinrichtung trägt.

5. Ventil mit Durchflussmesser nach Anspruch 4, **dadurch gekennzeichnet, dass** das Gehäuse (1, 2) auf einer planen Fläche einen Symbolträger (11) aufweist, dass der Drehschieber (12) eine mit dem Symbolträger (11) zusammenwirkende zweite Anzeigemarke (33) aufweist, und die drei planen Flächen von Drehbüchse (28), Drehschieber (12, 14) und Gehäuse (1, 2) zueinander parallel liegen.

6. Ventil mit Durchflussmesser nach Anspruch 1, **dadurch gekennzeichnet, dass** zur undrehbaren Lagerung der Stellungsanzeigestange (20) in der Drehspindel (12) eine axiale Kamm-Nut-Führung (25) vorhanden ist.

7. Ventil mit Durchflussmesser nach Anspruch 5, dass der Symbolträger (11) Symbole für eine 1/4-Öffnung, 1/2-Öffnung, 3/4-Öffnung, 4/4-Öffnung und 0-Öffnung des Ventiles trägt, wobei die 0-Öffnung eine leckagedichte Stellung des Drehschiebers anzeigt.

8. Ventil mit Durchflussmesser nach Anspruch 7, dass der Symbolträger (11) ein zusätzliches Symbol (34) trägt das den Beginn der Öffnung des Ventils anzeigt.

## Claims

1. A flow regulating valve with a flow meter, comprising a housing (1, 2) having a pipeline section (4, 5), a transverse pipe (7) arranged radially to the pipeline section (4,5), a rotating spindle (12) arranged coaxially to the transverse pipe, which rotating spindle is mounted in the housing (1, 2), and has a bore (19) extending through the rotating spindle and closed to the exterior, into which there projects a position indicator bar (20) which has a spring support point (23), in that a helical spring (22) determining an indicator position is clamped between this spring support point (23) and a rotating spindle spring support (24), and there is a valve closing body (12, 26) which is closable in its end position with the aid of the rotating spindle (12), and an inflow element (21) arranged in the transverse pipe (7), which may be prestressed by the helical spring (22) into an initial position and is displaceable axially by a pipeline flow, the respective position of which is readable from the exterior through a transparent part (14) of the rotating spindle (12) on an indicator device comprising a scale and an indicator marker (32), the transverse pipe (7) projecting radially into the pipeline section (3, 4) and the rotating spindle (12) supporting the valve closing body (12, 26), which as a result of the spindle rotation directly opens and closes an outlet opening (10) of the transverse pipe (7), and in that the inflow element (21) and the position indicator bar (20) are guided so as to be jointly displaceable axially in the valve closing body (12, 26), **characterised in that** the rotating spindle (12) is a rotary slide valve, the valve closing body of which comprises a control edge (26) which is located at the transverse pipe (7) and is rotatable, the transverse pipe (7) comprising an opening (10) in its wall, the margin (9) of which forms a valve seat, **in that** the position indicator bar (20) is mounted so as to be non-rotatable relative to the rotating spindle (12) and is connected in movement with a rotating sleeve (28) in such a way that the axial movement of the position indicator bar (20) is converted into a rotary movement of the rotating sleeve (28), the rotating sleeve (28) carrying a part (32) of the indicator device.

2. A valve with a flow meter according to Claim 1, **characterised in that** between the position indicator bar (20) and the rotating sleeve (28) there is at least one movement-converting device consisting of a connecting link (29) and a connecting link pin (27) guided displaceably therein, the connecting link (29) being helical.

3. A valve with a flow meter according to Claim 2, **characterised in that** there are two connecting links (29) located diametrically opposite one another and two connecting link pins (27).

4. A valve with a flow meter according to one of Claims 1-3, **characterised in that** the rotating sleeve (28) comprises the indicator marker (32) on a plane surface and the rotary slide valve (12, 14) carries the scale of the indicator device on a plane surface.

5. A valve with a flow meter according to Claim 4, **characterised in that** the housing (1, 2) comprises a symbol carrier (11) on a plane surface, **in that** the rotary slide valve (12) comprises a second indicator marker (33) cooperating with the symbol carrier (11), and the three plane surfaces of the rotating sleeve (28), the rotary slide valve (12, 14) and the housing (1, 2) lie parallel to one another.

6. A valve with a flow meter according to Claim 1, **characterised in that** there is an axial comb and groove guide (25) for the non-rotatable mounting of the position indicator bar (20) in the rotating spindle (12).

7. A valve with a flow meter according to Claim 5, **characterised in that** the symbol carrier (11) carries symbols for 1/4-opening, 1/2-opening, 3/4-opening, 4/4-opening and 0-opening of the valve, the 0-opening indicating a leak-proof position of the rotary slide valve.

8. A valve with a flow meter according to Claim 7, [**characterised**] in that the symbol carrier (11) carries an additional symbol (34) which indicates the beginning of the opening of the valve.

## Revendications

1. Vanne de réglage d'écoulement avec débitmètre, avec un logement (1, 2) comportant une section conductrice (4, 5), un tube transversal (7) disposé de façon radiale par rapport à la section conductrice (4, 5), avec une broche de tournage (12) disposée de façon équiaxiale par rapport au tube transversal, qui est placée dans le logement (1, 2), et comporte un alésage (19) fermé vers l'extérieur s'étendant à travers la broche de tournage, alésage dans lequel une barre d'indication de position (20) se dresse, laquelle comporte un point de butée de ressort (23), de sorte qu'un ressort à vis (22) déterminant une position d'affichage est tendu entre ce point de butée de ressort (23) et un support de ressort de broche de tournage (24) et il existe un corps de fermeture de vanne (12, 26) pouvant être fermé dans sa position finale à l'aide de la broche de tournage (12), et avec un élément de soufflage (21) disposé dans le tube transversal (7), élément qui est tendu par le ressort à vis (22) dans une position de départ et peut être décalé axialement par un courant directeur, dont la position respective peut être lue de l'extérieur par une partie transparente (14) de la broche de tournage (12) à travers un dispositif d'affichage comprenant une graduation et un repère d'affichage (32), moyennant quoi le tube transversal (7) rentre radialement dans la section conductrice (3, 4) et la broche de tournage (12) supporte le corps de fermeture de vanne (12, 26), qui ouvre et ferme directement une ouverture de sortie (10) du tube transversal (7) par la rotation de la broche, et de sorte que l'élément de soufflage (21) et la barre d'indication de position (20) sont insérées mobiles axiales conjointement dans le corps de fermeture de vanne (12, 26), **caractérisée en ce que** la broche de tournage (12) est conçue comme tiroir tournant dont le corps de fermeture de vanne comporte une arête d'attaque (26) qui se situe auprès du tube transversal (7) et peut pivoter, moyennant quoi le tube transversal (7) comporte un passage (10) dans une paroi, passage dont le bord (9) forme un siège de vanne, de sorte que la barre d'indication de position (20) est placée de façon à ne pas pivoter par rapport à la broche de tournage (12) et est reliée en mouvement avec une douille de rotation (28), de sorte que le mouvement axial de la barre d'indication de position (20) est déformée en un mouvement de rotation de la douille de rotation (28), moyennant quoi la douille de rotation (28) porte une partie (32) du dispositif d'affichage.

2. Vanne avec débitmètre selon la revendication 1, **caractérisée en ce qu'**il existe entre la barre d'indication de position (20) et la douille de rotation (28) au moins un dispositif de déformation de mouvement existant à partir d'une coulisse (29) et d'une cheville de coulisse (27) introduite dedans mobile, moyennant quoi la coulisse (29) est en forme de spirale.

3. Vanne avec débitmètre selon la revendication 2, **caractérisée en ce qu'**il existe deux coulisses (29) diamétralement opposées l'une à l'autre et deux chevilles de coulisse (27).

4. Vanne avec débitmètre selon l'une quelconque des revendications 1 à 3, **caractérisée en ce que** la douille de rotation (28) comporte un repère d'affichage (32) sur une surface plane et **en ce que** le tiroir tournant (12, 14) porte la graduation du dispositif d'affichage sur une surface plane.

5. Vanne avec débitmètre selon la revendication 4, **caractérisée en ce que** le logement (1, 2) comporte un support de symbole (11) sur une surface plane, **en ce que** le tiroir tournant (12) comporte un second repère d'affichage (13) agissant conjointement avec le support de symbole (11) et les trois surfaces planes de la douille de rotation (28), du tiroir tournant (12, 14) et du logement (1, 2) sont parallèles les unes aux autres.

6. Vanne avec débitmètre selon la revendication 1, **caractérisée en ce qu'**il existe un guide dent-encoche (25) axial dans la broche de tournage (12) pour positionner sans rotation la barre d'indication de position (20).

7. Vanne avec débitmètre selon la revendication 5, **caractérisée en ce que** le support de symbole (11) porte des symboles pour une ouverture 1/4, une ouverture 1/2, une ouverture 3/4, une ouverture 4/4 et une ouverture 0, moyennant quoi l'ouverture 0 indique une position étanche du tiroir tournant.

8. Vanne avec débitmètre selon la revendication 7, **caractérisée en ce que** le support de symbole (11) porte un symbole supplémentaire (34) qui indique le début de l'ouverture de la vanne.
